(19) Europäisches Patentamt
European Patent Office
Office européen des brevets

(11) **EP 4 534 325 A1**

(12) **EUROPEAN PATENT APPLICATION**
published in accordance with Art. 153(4) EPC

(43) Date of publication:
**09.04.2025 Bulletin 2025/15**

(21) Application number: **22944056.5**

(22) Date of filing: **03.06.2022**

(51) International Patent Classification (IPC):
***B60L 15/10*** (2006.01)    ***B60L 15/20*** (2006.01)

(52) Cooperative Patent Classification (CPC):
**B60L 15/10; B60L 15/20**

(86) International application number:
**PCT/JP2022/022692**

(87) International publication number:
**WO 2023/233670 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NISSAN MOTOR CO., LTD.**
**Kanagawa 221-0023 (JP)**

(72) Inventors:
• **SHOUJI, Mitsuhiro**
 **Atsugi-shi, Kanagawa 243-0123 (JP)**

• **NAKAJIMA, Takashi**
 **Atsugi-shi, Kanagawa 243-0123 (JP)**
• **SAWADA, Akira**
 **Atsugi-shi, Kanagawa 243-0123 (JP)**
• **MOTOSUGI, Jun**
 **Atsugi-shi, Kanagawa 243-0123 (JP)**
• **KOJIMA, Tetsuro**
 **Atsugi-shi, Kanagawa 243-0123 (JP)**

(74) Representative: **Hoefer & Partner Patentanwälte
mbB
Pilgersheimer Straße 20
81543 München (DE)**

(54) **MOTOR CONTROL METHOD AND MOTOR CONTROL DEVICE**

(57)    A gradient parameter indicating a road surface gradient of the electric vehicle is acquired, a temperature parameter indicating a temperature in a motor control system including the electric motor is acquired, a torque restriction process is executed in which when at least one of the gradient parameter and the temperature parameter is equal to or larger than a corresponding one of predetermined threshold values respectively defined therefor, and the upper limit of the request torque is set to a correction torque upper limit smaller than a predetermined basic torque upper limit. In the torque restriction process, a first torque is determined based on the gradient parameter, a second torque for providing a predetermined acceleration to the electric vehicle is determined, and the correction torque upper limit is determined by correcting the basic torque upper limit with reference to the first torque and the second torque.

FIG. 2

EP 4 534 325 A1

## EP 4 534 325 A1

**Description**

TECHNICAL FIELD

The present invention relates to a motor control method and a motor control device that include an electric motor as a drive source.

BACKGROUND ART

JP4946100B describes a motor control method that includes a first torque restriction unit for restricting a torque according to a motor temperature when the motor temperature is equal to or higher than a first predetermined value in order to avoid a failure in a motor, and a second torque restriction unit for restricting the torque to a constant upper limit torque that is smaller than that of the first torque restriction unit at a time point when the motor temperature exceeds a second predetermined value smaller than the first predetermined value in order to restrain the motor temperature from reaching the first predetermined value in a high load state such as a case in which an electric vehicle travels on a long uphill road.

SUMMARY OF INVENTION

In the control method described in JP4946100B, when the vehicle is traveling on the uphill road having a gradient equal to or larger than a certain value, the motor has a sufficient maximum torque performance, and the second torque restriction unit (restriction for restraining an increase in temperature) functions to restrict an upper limit of a motor torque even when the motor temperature is within an allowable range, whereby a desired traveling performance at the time of traveling on the uphill road may not be achieved.

Therefore, an object of the present invention is to achieve both restraint of an excessive increase in temperature in a motor control system and securement of a traveling performance of a vehicle at the time of traveling on an uphill road.

According to one aspect of the present invention, a motor control method for controlling an operation of an electric motor serving as a drive source based on a predetermined request torque in an electric vehicle including the electric motor is provided. The motor control method acquires a gradient parameter indicating a road surface gradient of the electric vehicle, acquires a temperature parameter indicating a temperature in a motor control system including the electric motor, and executes a torque restriction process of setting an upper limit of the request torque to a correction torque upper limit smaller than a predetermined basic torque upper limit when at least one of the gradient parameter and the temperature parameter is equal to or larger than a corresponding one of predetermined threshold values respectively defined for the gradient parameter and the temperature parameter. Further, in the torque restriction process, a first torque is determined based on the gradient parameter, a second torque for providing a predetermined acceleration to the electric vehicle is determined, and the correction torque upper limit is determined by correcting the basic torque upper limit with reference to the first torque and the second torque.

BRIEF DESCRIPTION OF DRAWINGS

[FIG. 1] FIG. 1 is a block diagram illustrating main components of a vehicle drive system according to a first embodiment.
[FIG. 2] FIG. 2 is a block diagram illustrating a configuration of a motor controller according to the first embodiment.
[FIG. 3] FIG. 3 is a diagram illustrating an example of a basic torque limiter.
[FIG. 4] FIG. 4 is a block diagram illustrating a configuration of a gradient torque estimation unit.
[FIG. 5] FIG. 5 is an explanatory diagram illustrating a dynamic model of an electric vehicle.
[FIG. 6] FIG. 6 is a flowchart illustrating a process performed by an upper limit torque restriction request determination unit.
[FIG. 7] FIG. 7 is a block diagram illustrating a configuration of a torque restriction unit.
[FIG. 8] FIG. 8 is a flowchart illustrating an overall process of a motor control method according to the first embodiment.
[FIG. 9] FIG. 9 is a block diagram illustrating main components of a vehicle drive system according to a second embodiment.
[FIG. 10] FIG. 10 is a block diagram illustrating the configuration of the motor controller.
[FIG. 11] FIG. 11 is a diagram illustrating a method of estimating a gradient torque.
[FIG. 12] FIG. 12 is a block diagram illustrating a configuration of the gradient torque estimation unit.
[FIG. 13] FIG. 13 is a diagram illustrating an example of a map for determining an acceleration torque.
[FIG. 14] FIG. 14 is a block diagram illustrating a configuration of the torque restriction unit.

[FIG. 15] FIG. 15 is a flowchart illustrating an overall process of a motor control method according to the second embodiment.

[FIG. 16] FIG. 16 shows graphs illustrating respective control results according to a comparative example and examples.

DESCRIPTION OF EMBODIMENTS

Hereinafter, embodiments of the present invention will be described with reference to the drawings.

[First Embodiment]

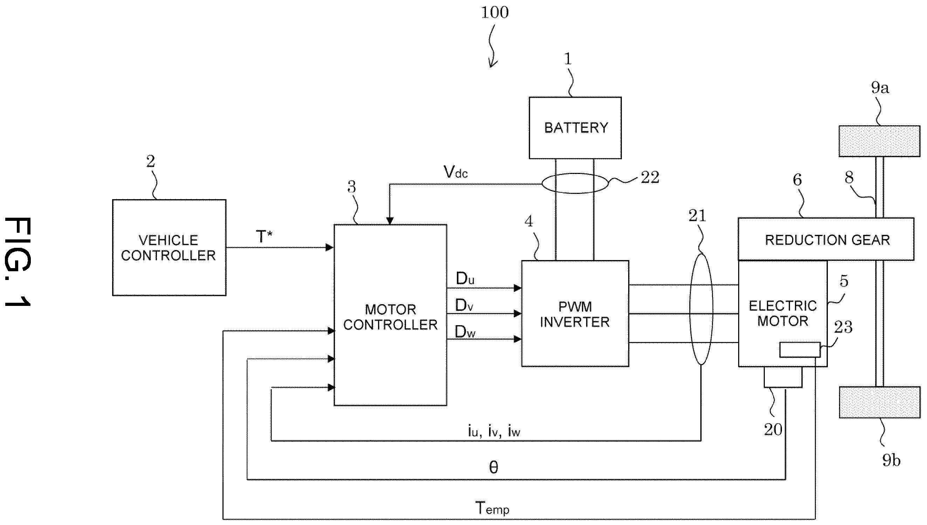

FIG. 1 is a block diagram illustrating main components of a vehicle drive system 100 mounted in an electric vehicle. As illustrated, the vehicle drive system 100 mainly includes a battery 1, a vehicle controller 2, a motor controller 3 serving as a motor control device, a pulse width modulation (PWM) inverter 4, an electric motor 5, a reduction gear 6, a drive shaft 8, drive wheels 9a and 9b, a rotation sensor 20, a current sensor 21, a voltage sensor 22, and a thermistor 23. The electric vehicle refers to a vehicle using an electric motor as a drive source. A vehicle in which the electric motor 5 can be used as a part or all of a drive source of the vehicle is used as the electric vehicle. That is, the electric vehicle includes not only electrical vehicles but also hybrid vehicles, fuel cell vehicles, and the like.

The battery 1 is connected to the electric motor 5 via the PWM inverter 4 and discharges to supply drive power to the electric motor 5. The battery 1 is chargeable by receiving regenerative power from the electric motor 5.

The vehicle controller 2 is implemented by, for example, a computer including a central processing unit (CPU), a read-only memory (ROM), a random access memory (RAM), an input/output interface (I/O interface), and the like. The vehicle controller 2 generates a torque required for the electric vehicle (hereinafter, referred to as a "high-level request torque $T^*$") based on an operation of an accelerator pedal or a brake pedal by a driver of the electric vehicle and other vehicle conditions, and outputs the generated torque to the motor controller 3.

The motor controller 3 is implemented by, for example, a computer including a central processing unit (CPU), a read-only memory (ROM), a random access memory (RAM), an input/output interface (I/O interface), and the like. The motor controller 3 is programmed to generate a control signal (three-phase duty command values $D_u$, $D_v$, and $D_w$) of the PWM inverter 4 by executing various processes to be described later based on the high-level request torque $T^*$ received from the vehicle controller 2 and input signals from various sensors.

The PWM inverter 4 includes, for example, two switching elements (for example, power semiconductor devices such as an insulated gate bipolar transistor (IGBT) and a metal-oxide-semiconductor field-effect transistor (MOS-FET)) corresponding to each phase. The PWM inverter 4 generates a drive signal for each switching element based on a comparison result between the three-phase duty command values $D_u$, $D_v$, and $D_w$ received from the motor controller 3 and a carrier triangle wave of a predetermined frequency. Then, the PWM inverter 4 turns on/off the switching element in response to the drive signal, thereby converting a direct current supplied from the battery 1 into an alternating current and adjusting a current supplied to the electric motor 5. The PWM inverter 4 reversely converts an alternating current generated by the electric motor 5 due to a regenerative braking force into a direct current, and adjusts a current supplied to the battery 1.

The electric motor 5 is implemented by, for example, a three-phase alternating current motor, and generates a drive force by using the alternating current supplied from the PWM inverter 4. The drive force generated by the electric motor 5 is transmitted to the pair of left and right drive wheels 9a and 9b via the reduction gear 6 and the drive shaft 8. When the electric motor 5 rotates while being rotated by the drive wheels 9a and 9b, the electric motor 5 generates a regenerative braking force and recovers kinetic energy of the vehicle drive system 100 as electric energy.

The reduction gear 6 includes, for example, a plurality of gears. The reduction gear 6 reduces a rotation speed of the electric motor 5 and transmits the reduced rotation speed to the drive shaft 8, thereby generating a drive torque or a braking torque proportional to a speed reduction ratio.

The rotation sensor 20 detects a rotor position $\theta$ of the electric motor 5 and outputs the detected rotor position $\theta$ to the motor controller 3. The rotation sensor 20 is implemented by, for example, a resolver, or an encoder. The current sensor 21 detects a current flowing through the electric motor 5 and outputs the detected current to the motor controller 3. In the present embodiment, the current sensor 21 detects three-phase alternating currents $i_u$, $i_v$, and $i_w$ of the electric motor 5, respectively. Note that the currents of any two phases may be detected by using the current sensor 21, and the current of the remaining one phase may be calculated. The voltage sensor 22 detects a direct voltage value $V_{dc}$ of the battery 1 and outputs the detected direct voltage value $V_{dc}$ to the motor controller 3. The thermistor 23 detects a temperature of a stator winding of the electric motor 5 (hereinafter, also simply referred to as a "winding temperature $T_{emp}$") and outputs the detected temperature to the motor controller 3.

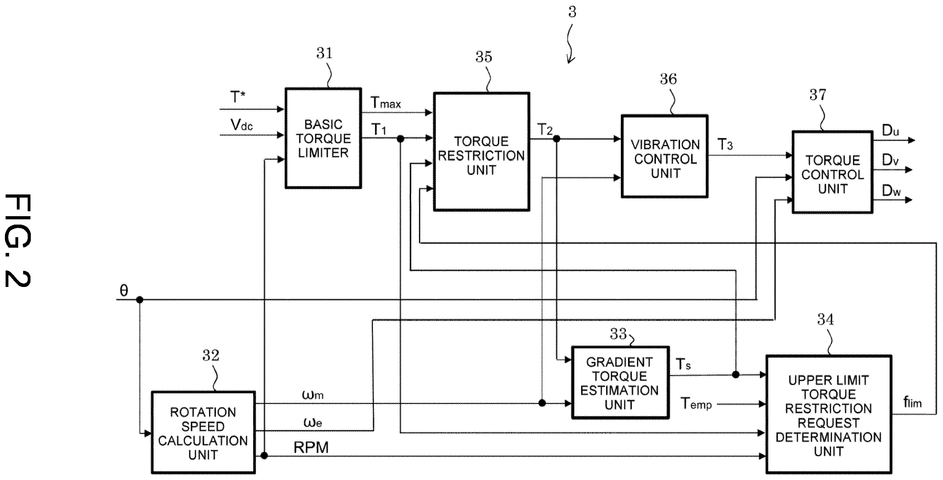

FIG. 2 is a block diagram illustrating a configuration of the motor controller 3. As illustrated, the motor controller 3 is programmed to function as a basic torque limiter 31, a rotation speed calculation unit 32, a gradient torque estimation unit 33, an upper limit torque restriction request determination unit 34, a torque restriction unit 35, a vibration control unit 36, and a torque control unit 37.

The basic torque limiter 31 receives the high-level request torque T* from the vehicle controller 2, the direct voltage value $V_{dc}$ from the voltage sensor 22, and a rotation speed RPM of the electric motor 5 as inputs, and calculates a maximum torque $T_{max}$ and a basic request torque $T_1$ as basic torque upper limits.

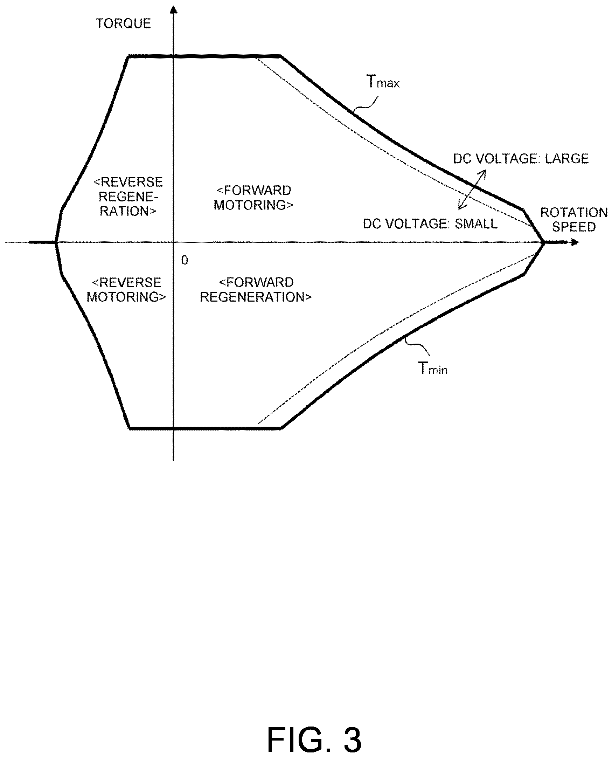

FIG. 3 is a diagram illustrating a process performed by the basic torque limiter 31. As illustrated, the basic torque limiter 31 first determines the maximum torque $T_{max}$ corresponding to a positive output limit torque and a minimum torque $T_{min}$ corresponding to a negative output limit torque of the electric motor 5 based on the rotation speed RPM and the direct voltage value $V_{dc}$. Then, the basic torque limiter 31 sets, as the basic request torque $T_1$, a value obtained by limiting the high-level request torque T* using the maximum torque $T_{max}$ and the minimum torque $T_{min}$. Further, the basic torque limiter 31 outputs the obtained maximum torque $T_{max}$ and the basic request torque $T_1$ to the torque restriction unit 35.

The rotation speed calculation unit 32 receives the rotor position θ as an input, and calculates a mechanical angular speed $\omega_m$ [rad/s] indicating the rotation speed of the electric motor 5, an electric angular speed $\omega_e$ [rad/s], and the rotation speed RPM [rpm] based on a temporal change amount of the rotor position θ. Then, the rotation speed calculation unit 32 outputs the calculated mechanical angular speed $\omega_m$ to the gradient torque estimation unit 33 and the vibration control unit 36, outputs the electric angular speed $\omega_e$ to the torque control unit 37, and outputs the rotation speed RPM to the upper limit torque restriction request determination unit 34.

The gradient torque estimation unit 33 receives the mechanical angular speed $\omega_m$ from the rotation speed calculation unit 32 and a restricted request torque $T_2$ to be described later from the torque restriction unit 35 as inputs, and calculates a gradient torque $T_s$ as a first torque. Here, the gradient torque $T_s$ according to the present embodiment is determined as a torque required to maintain a vehicle speed at a certain value or less (particularly, 0) on an uphill road on which the electric vehicle is traveling. That is, the gradient torque $T_s$ is determined as a torque that counteracts a force in a rollback direction acting on the electric vehicle due to a gradient of the uphill road.

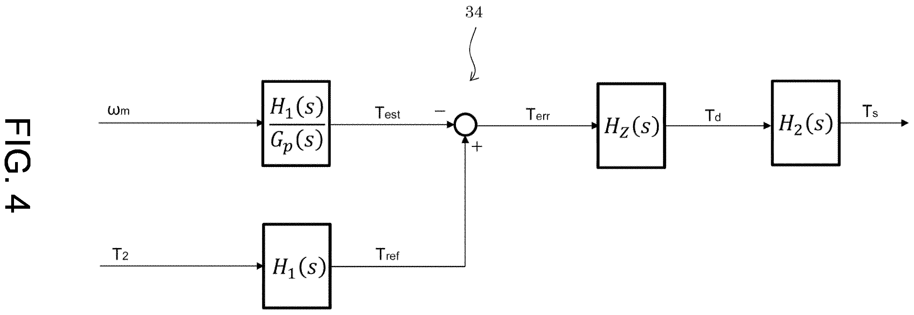

FIG. 4 is a block diagram illustrating a configuration of the gradient torque estimation unit 33. As illustrated, the gradient torque estimation unit 33 first filters the mechanical angular speed $\omega_m$ by using a filter $H_1(s)/G_p(s)$ determined as a quotient of a transfer function $G_p(s)$ with respect to a filter $H_1(s)$, thereby calculating an estimated torque $T_{est}$. The transfer function $G_p(s)$ represents a transfer characteristic from the mechanical angular speed $\omega_m$ to an output torque of the electric motor 5 (hereinafter, also simply referred to as a "motor torque $T_m$"). Further, the filter $H_1(s)$ is configured as a low-pass filter having a degree equal to or larger than a difference between a denominator degree and a numerator degree of the transfer function $G_p(s)$.

Further, the gradient torque estimation unit 33 processes the restricted request torque $T_2$ by using the filter $H_1(s)$ described above to calculate a reference torque $T_{ref}$. Then, the gradient torque estimation unit 33 subtracts the estimated torque $T_{est}$ from the reference torque $T_{ref}$ to calculate a deviation $T_{err}$ thereof. Further, the gradient torque estimation unit 33 processes the deviation $T_{err}$ by using a filter $H_z(s)$ to calculate a disturbance torque $T_d$ as a gradient parameter. Then, the gradient torque estimation unit 33 processes the disturbance torque $T_d$ by using a filter $H_2(s)$ to calculate the gradient torque $T_s$.

Hereinafter, the transfer function $G_p(s)$ and the respective filters $H_1(s)$, $H_z(s)$, and $H_2(s)$ will be described in detail.

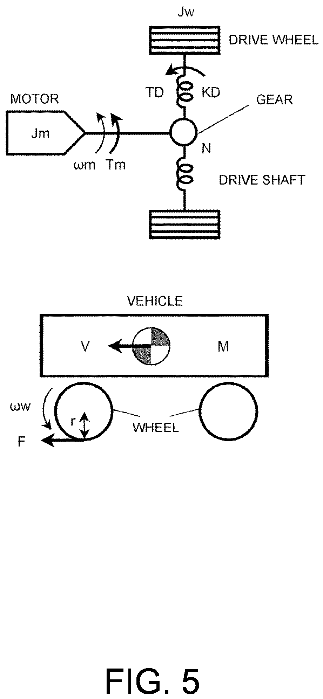

FIG. 5 shows an example of a dynamic model of the electric vehicle. The following Equations of motion 1 to 5 can be derived by the illustrated dynamic model.

[Math. 1]

$$J_m \cdot \frac{d\omega_m}{dt} = T_m - \frac{T_D}{N} \tag{1}$$

$$2J_w \cdot \frac{d\omega_w}{dt} = T_D - rF \tag{2}$$

$$M \cdot \frac{dV}{dt} = F \tag{3}$$

$$T_D = K_D \cdot \int \left( \frac{\omega_m}{N} - \omega_w \right) dt \tag{4}$$

$$F = K_t(r \cdot \omega_w - V) \tag{5}$$

Note that characters in Equations 1 to 5 include characters that have been already described, and are defined as follows.

$J_m$: inertia of electric motor
$J_w$: inertia of drive wheels

M: vehicle weight
$K_D$: torsional rigidity of wheel drive system
$K_t$: coefficient related to friction between tires and road surface
N: overall gear ratio
R: load radius of tire
$\omega_m$: mechanical angular speed of electric motor
$T_m$: motor torque
$T_D$: torque of drive wheel
F: force applied to vehicle
V: vehicle body speed
$\omega_w$: angular speed of drive wheels

Referring to the above Equations of motion 1 to 5, the transfer function $G_p(s)$ can be represented by the following Equation 6. Further, respective coefficients $a_1$ to $a_4$ and respective coefficients $b_0$ to $b_3$ in Equation 6 are represented by the following Equations 7 to 14.

[Math. 2]

$$G_p(s) = \frac{b_3 s^3 + b_2 s^2 + b_1 s + b_0}{s(a_4 s^3 + a_3 s^2 + a_2 s + a_1)} \tag{6}$$

$$a_4 = 2J_m J_w M \tag{7}$$

$$a_3 = J_m(2J_w + Mr^2)K_t \tag{8}$$

$$a_2 = (J_m + \frac{2J_w}{N^2})MK_D \tag{9}$$

$$a_1 = (J_m + \frac{2J_w}{N^2} + \frac{Mr^2}{N^2})K_D K_t \tag{10}$$

$$b_3 = 2J_w M \tag{11}$$

$$b_2 = (2J_w + Mr^2)K_t \tag{12}$$

$$b_1 = MK_D \tag{13}$$

$$b_0 = K_D K_t \tag{14}$$

When poles and zeros of the transfer function $G_p(s)$ shown by Equation 6 described above are examined, one pole and one zero have extremely close values. This means that $\alpha$ and $\beta$ in the following Equation 15 have extremely close values.
[Math. 3]

$$G_p(s) = \frac{(s + \beta)\left(b_2' s^2 + b_1' s + b_0'\right)}{s(s + \alpha)\left(a_3' s^2 + a_2' s + a_1'\right)} \tag{15}$$

Therefore, by performing pole-zero cancellation that approximates $a = \beta$ in Equation 15, the transfer function $G_p(s)$ in the (quadratic)/(cubic) form can be obtained as shown in the following Equation 16.
[Math. 4]

$$G_p(s) = \frac{\left(b_2' s^2 + b_1' s + b_0'\right)}{s\left(a_3' s^2 + a_2' s + a_1'\right)} \tag{16}$$

Next, the filter $H_1(s)$ will be described. The filter $H_1(s)$ is implemented by a linear low-pass filter defined by the following Equation 17 from the viewpoint of using $H_1(s)/G_p(s)$ as a proper transfer function.
[Math. 5]

$$H_1(s) = \frac{1}{\tau_1 s + 1} \qquad (17)$$

Note that a time constant $\tau_1$ is set to an appropriate value on the order of several tens of milliseconds, for example, according to torque response characteristics of the electric motor 5.

Next, the filter $H_z(s)$ will be described. First, when Equation 16 described above is rewritten, the following Equation 18 is obtained.

[Math. 6]

$$G_p(s) = \frac{M_p \left( s^2 + 2\zeta_Z \omega_z s + \omega_z^2 \right)}{s \left( s^2 + 2\zeta_p \omega_p s + \omega_p^2 \right)} \qquad (18)$$

However, respective coefficients in Equation 18 are determined by the following Equation 19 to Equation 23.

[Math. 7]

$$\zeta_Z = \frac{b_1{}'}{2\sqrt{b_0{}' b_2{}'}} \qquad (19)$$

$$\omega_z = \sqrt{b_0{}' b_2{}'} \qquad (20)$$

$$\zeta_p = \frac{a_2{}'}{2\sqrt{a_1{}' a_3{}'}} \qquad (21)$$

$$\omega_p = \sqrt{\frac{a_1{}'}{a_3{}'}} \qquad (22)$$

$$M_p = \frac{b_2{}'}{a_3{}'} \qquad (23)$$

As described above, the filter $H_z(s)$ is determined by the following Equation 24.

[Math. 8]

$$H_z(s) = \frac{\left( s^2 + 2\zeta_Z \omega_z s + \omega_z^2 \right)}{\left( s^2 + 2\zeta_c \omega_z s + \omega_p^2 \right)} \qquad (24)$$

However, "$\zeta_c$" is determined as a constant smaller than "$\zeta_z$".

Next, the filter $H_2(s)$ will be described. The filter $H_2(s)$ is configured as a low-pass filter that removes high-frequency components (influences of fine undulations, cracks, and steps of the road surface) other than an influence of the gradient included in the disturbance torque $T_d$. Specifically, the filter $H_2(s)$ is implemented by a linear low-pass filter defined by the following Equation 25.

[Math. 9]

$$H_2(s) = \frac{1}{\tau_2 s + 1} \qquad (25)$$

Note that a time constant $\tau_2$ is set to an appropriate value on the order of several hundreds of milliseconds, for example, according to an assumed road surface condition.

Next, referring back to FIG. 2, the upper limit torque restriction request determination unit 34 will be described. The upper limit torque restriction request determination unit 34 receives the gradient torque $T_s$, the winding temperature $T_{emp}$, the rotation speed RPM, and the basic request torque $T_1$ as inputs, and determines a restriction execution flag $f_{lim}$.

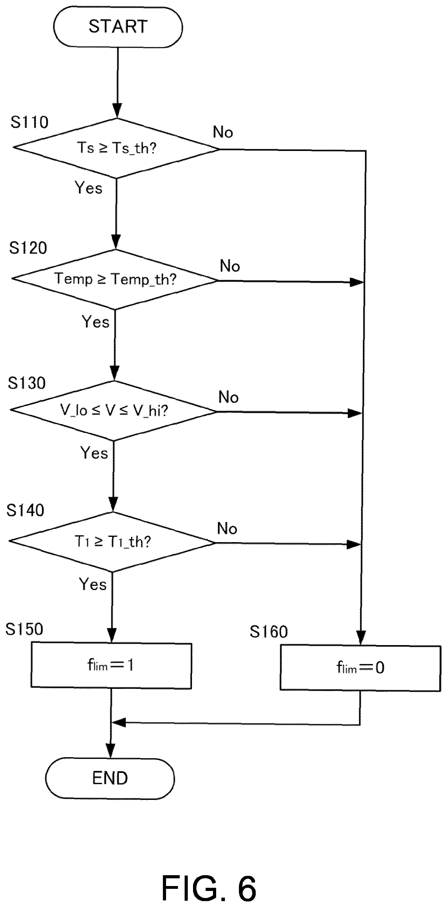

FIG. 6 is a flowchart illustrating a process performed by the upper limit torque restriction request determination unit 34. As illustrated, in steps S110 to S140, the upper limit torque restriction request determination unit 34 determines whether the gradient torque $T_s$ is equal to or larger than a gradient torque threshold value $T_{s\_th}$, whether the winding temperature $T_{emp}$ is equal to or larger than a temperature threshold value $T_{emp\_th}$, whether a vehicle body speed $V$ is within a range from a low vehicle speed threshold value $V_{\_lo}$ to a high vehicle speed threshold value $V_{\_hi}$, and whether the basic request torque $T_1$ is equal to or larger than a request torque threshold value $T_{1\_th}$, respectively. Then, the upper limit torque restriction request determination unit 34 sets the restriction execution flag $f_{lim}$ to "1" when all results of the above respective determinations are positive, and sets the restriction execution flag $f_{lim}$ to "0" when any one of the results of the above respective determinations is negative.

The vehicle body speed $V$ used for the above determination is calculated based on the rotation speed RPM according to the following Equation 26.

[Math. 10]

$$V = \frac{RPM \cdot 3.6 \cdot 2\pi \cdot \frac{r}{N}}{60} \tag{26}$$

Here, the gradient torque threshold value $T_{s\_th}$ used in S110 is determined to be an appropriate value of the gradient torque $T_s$ as a criterion for determining whether the gradient is large enough to require execution of restriction on an upper limit of the basic request torque $T_1$ (hereinafter, also simply referred to as a "torque restriction") (whether the road is a steep uphill road). Further, the temperature threshold value $T_{emp\_th}$ used in S120 is determined to be an appropriate value of the winding temperature $T_{emp}$ as a criterion for determining whether the winding temperature $T_{emp}$ reaches a value large enough to require the execution of the torque restriction.

In addition, each of the low vehicle speed threshold value $V_{\_lo}$ and the high vehicle speed threshold value $V_{\_hi}$ used in S130 is determined to be an appropriate value of the vehicle body speed $V$ as a criterion for determining whether the vehicle speed of the electric vehicle at the time of forward movement is within a predetermined vehicle speed range in which the execution of the torque restriction is required.

Here, in a region (a low vehicle speed region) in which the vehicle body speed $V$ is equal to or lower than a certain value, the electric vehicle cannot reach a desired vehicle speed by executing the torque restriction, or an excessive time is required until the electric vehicle reaches the desired vehicle speed, and thus it is assumed that a traveling time on the uphill road is prolonged. In this case, the electric motor 5 continues to output the torque for a long time in the low vehicle speed region (a low rotation speed region of the electric motor 5). Accordingly, it is assumed that in the low vehicle speed region described above, an increase in the winding temperature $T_{emp}$ is promoted by executing the torque restriction. With this in mind, in the present embodiment, the low vehicle speed threshold value $V_{\_lo}$ is determined to be a suitable value of the vehicle body speed $V$ from the viewpoint of determining the low vehicle speed region in which the execution of the torque restriction is to be prohibited. That is, the low vehicle speed threshold value $V_{\_lo}$ is determined to be an appropriate value from the viewpoint of determining the low vehicle speed region in which an excessive increase in temperature in a motor control system can be promoted by executing the torque restriction.

On the other hand, in a vehicle speed region (a high vehicle speed region) in which the vehicle body speed $V$ is equal to or higher than the certain value, a scene is assumed in which the gradient of the uphill road is relatively small and an excessive increase in the winding temperature $T_{emp}$ is less likely to occur. Accordingly, when the torque restriction is executed in such a scene, a situation is assumed that acceleration performance of the electric vehicle is unnecessarily impaired although the possibility of the excessive increase in temperature in the motor control system is low. With this in mind, in the present embodiment, the high vehicle speed threshold value $V_{\_hi}$ is determined to be a suitable value of the vehicle body speed $V$ from the viewpoint of determining the high vehicle speed region in which the execution of the torque restriction is to be prohibited. That is, the high vehicle speed threshold value $V_{\_hi}$ is determined to be an appropriate value from the viewpoint of determining the high vehicle speed region in which the acceleration performance of the electric vehicle may be unnecessarily impaired by executing the torque restriction.

Further, in a vehicle speed region (a medium vehicle speed region) except for the low vehicle speed region and the high vehicle speed region described above, a scene is assumed that the gradient is relatively large and the excessive increase in the winding temperature $T_{emp}$ may occur. Accordingly, in the present embodiment, the execution of the torque restriction is permitted in this scene.

Further, the request torque threshold value $T_{1\_th}$ used in S140 is determined as a reference value for determining whether there is an acceleration request for the electric vehicle (an acceleration intention by the driver).

Here, as a case in which the basic request torque $T_1$ is equal to or less than a certain value (a case in which it is estimated that there is no acceleration intention), a scene in which an accelerator pedal operation by the driver is not performed or a scene immediately after an ON operation or an OFF operation on the accelerator pedal is assumed. In the scene in which the accelerator pedal operation is not performed, the motor torque $T_m$ is less likely to reach a value large enough to cause the increase in the winding temperature $T_{emp}$ in the first place, and thus the torque restriction is unnecessary. Further, in the scene immediately after the ON operation or the OFF operation on the accelerator pedal, an error is likely to occur in the calculation of the gradient torque $T_s$ due to an influence of pitching in the electric vehicle. Therefore, in this scene, there is a concern that the accuracy of a correction torque upper limit (a correction torque upper limit $T_{lim}$ to be described later) calculated based on the gradient torque $T_s$ may decrease. With this in mind, in the present embodiment, the request torque threshold value $T_{1\_th}$ is determined to be an appropriate value of the basic request torque $T_1$ from the viewpoint of determining a situation in which the execution of the torque restriction is to be prohibited and there is no acceleration intention.

Then, the upper limit torque restriction request determination unit 34 outputs the set restriction execution flag $f_{lim}$ to the torque restriction unit 35.

Next, the torque restriction unit 35 will be described.

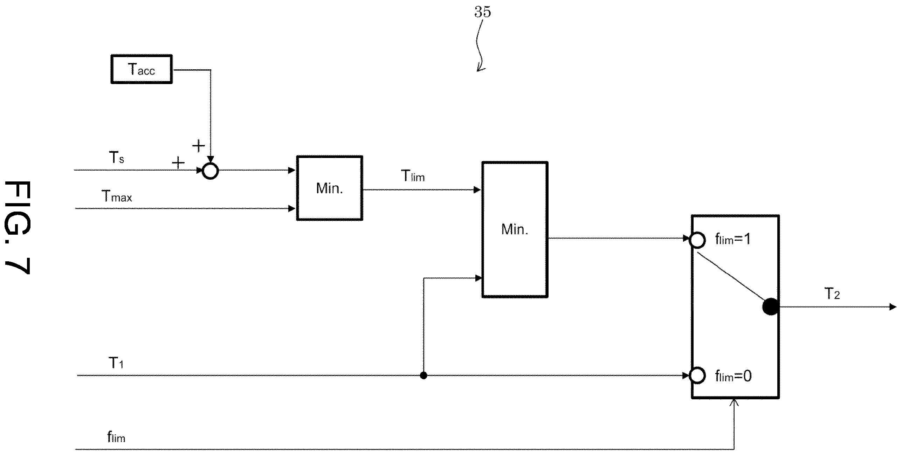

FIG. 7 is a block diagram illustrating a configuration of the torque restriction unit 35. As illustrated, when the restriction execution flag $f_{lim}$ is "0" (when there is no upper limit torque restriction request), the torque restriction unit 35 outputs the basic request torque $T_1$ as it is as the restricted request torque $T_2$. On the other hand, when the restriction execution flag $f_{lim}$ is "1" (when there is the upper limit torque restriction request), the torque restriction unit 35 outputs a value obtained by minimum selection between the basic request torque $T_1$ and the correction torque upper limit $T_{lim}$ as the restricted request torque $T_2$.

Further, the torque restriction unit 35 calculates the correction torque upper limit $T_{lim}$ by minimum selection between the maximum torque $T_{max}$ and the sum of the gradient torque $T_s$ and an acceleration torque $T_{acc}$. Note that the acceleration torque $T_{acc}$ is set to a value of the motor torque $T_m$ that is determined from the viewpoint of obtaining a minimum acceleration at which the electric vehicle does not interfere with a traffic flow at the time of traveling on the uphill road. In particular, the acceleration torque $T_{acc}$ according to the present embodiment is a fixed value experimentally determined in advance, and is stored in a predetermined storage area accessible by the motor controller 3.

According to a control logic related to a motor control method of the present embodiment described above, the restriction on the upper limit of the basic request torque $T_1$ is appropriately executed according to a temperature parameter (the winding temperature $T_{emp}$) and the gradient parameter (the disturbance torque $T_d$) when the electric vehicle is traveling on the uphill road.

Referring back to FIG. 2, the vibration control unit 36 executes, on the restricted request torque $T_2$, a known process (the process described in Japanese Patent Publication No. 3508742, etc.) for restraining torsional vibration of the drive shaft 8 to obtain a final request torque $T_3$, and outputs the final request torque $T_3$ to the torque control unit 37.

Further, the torque control unit 37 determines, based on the final request torque $T_3$ and other necessary input values, the three-phase duty command values $D_u$, $D_v$, and $D_w$ according to a known motor control logic (a current vector control, a voltage phase control, and the like).

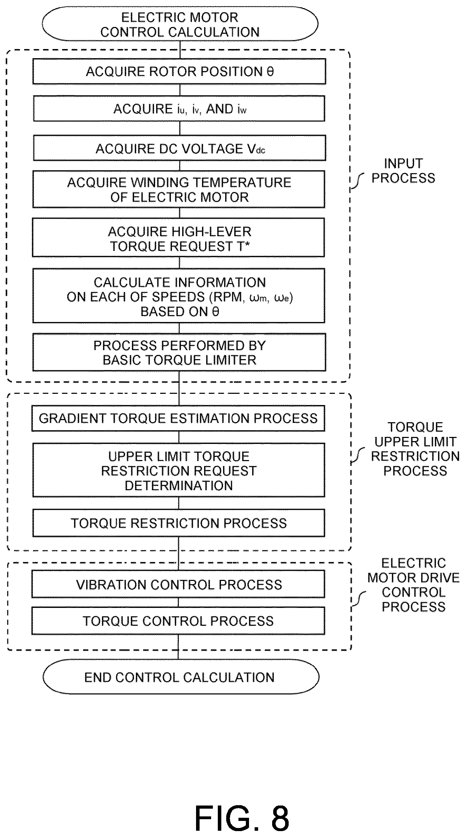

FIG. 8 is a flowchart illustrating an overall process of the motor control method according to the present embodiment described above.

A configuration of the motor control method according to the present embodiment described above and functions and effects thereof will be described.

According to the present embodiment, a motor control method for controlling an operation of the electric motor 5 based on a predetermined request torque in an electric vehicle including the electric motor 5 as a drive source is provided.

This motor control method acquires a gradient parameter (the disturbance torque $T_d$) indicating a road surface gradient of the electric vehicle, acquires a temperature parameter (the winding temperature $T_{emp}$) indicating a temperature in a motor control system including the electric motor 5, and executes a torque restriction process (the upper limit torque restriction request determination unit 34 and the torque restriction unit 35) of setting an upper limit of the request torque to the correction torque upper limit $T_{lim}$ smaller than a predetermined basic torque upper limit (the maximum torque $T_{max}$) when at least one of the gradient parameter and the temperature parameter is equal to or larger than a corresponding one (the gradient torque threshold value $T_{s\_th}$ or the temperature threshold value $T_{emp\_th}$) of predetermined threshold values respectively defined for the gradient parameter and the temperature parameter.

In particular, in the torque restriction process, a first torque (the gradient torque $T_s$) is determined based on the gradient parameter (the disturbance torque $T_d$), a second torque (the acceleration torque $T_{acc}$) for providing a predetermined acceleration to the electric vehicle is determined, and the correction torque upper limit $T_{lim}$ is determined by correcting the basic torque upper limit (the maximum torque $T_{max}$) with reference to the first torque (the gradient torque $T_s$) and the second torque (the acceleration torque $T_{acc}$).

Accordingly, in a scene in which the electric vehicle travels on the uphill road, the restriction on the upper limit of the basic request torque $T_1$ can be appropriately executed according to an intensity of the temperature in the motor control system and/or the magnitude of the gradient. Therefore, it is possible to achieve both restraint of the excessive increase in temperature in the motor control system and securement of a traveling performance (the acceleration performance) of the electric vehicle at the time of traveling on the uphill road.

In particular, in the present embodiment, the gradient torque $T_s$ is determined as the torque that counteracts the force in the rollback direction acting when the electric vehicle is traveling on the uphill road. The acceleration torque $T_{acc}$ is determined as the torque for obtaining the acceleration that does not interfere with the traffic flow. In addition, since the correction torque upper limit $T_{lim}$ is determined as a synthetic value of these torques, it is possible to more reliably achieve both the restraint of the increase in temperature and the securement of the traveling performance at the time of traveling on the uphill road.

In the present embodiment, the gradient torque $T_s$ is calculated (by the gradient torque estimation unit 33) based on the estimated torque $T_{est}$ which is an estimated value of the output torque (the motor torque $T_m$) of the electric motor 5, and the disturbance torque $T_d$ which is an estimated value of the disturbance determined according to the rotation speed (the mechanical angular speed $\omega_m$) of the electric motor 5.

Accordingly, a more specific control logic for calculating the gradient torque $T_s$ is achieved. In particular, the gradient torque $T_s$ can be calculated based on a signal that can be acquired in the vehicle drive system 100 without separately using a sensor for detecting the magnitude of the gradient.

Further, in the present embodiment, when a vehicle speed parameter (the vehicle body speed V) indicating a vehicle speed of the electric vehicle is out of a predetermined vehicle speed range ($V_{\_lo} \leq V \leq V_{\_hi}$), the upper limit of the request torque is set to the maximum torque $T_{max}$ regardless of a magnitude relation between the gradient torque $T_s$ or the winding temperature $T_{emp}$ and the corresponding one of the predetermined threshold values $T_{s\_th}$ and $T_{emp\_th}$ (No in S130 and S160).

Accordingly, upon appropriately detecting the low vehicle speed region in which the excessive increase in temperature in the motor control system can be promoted by executing the torque restriction and the high vehicle speed region in which the excessive increase in temperature is less likely to occur in the first place and the necessity of the torque restriction is low, it is possible to prohibit the execution of the torque restriction in these scenes. Therefore, the execution of the torque restriction can be limited into the medium vehicle speed region in which the excessive increase in temperature in the motor control system is concerned, for example, when the electric vehicle travels on the uphill road having the relatively large gradient. As a result, it is possible to achieve a better balance between the restraint of the excessive increase in temperature and the securement of the traveling performance of the electric vehicle at the time of traveling on the uphill road.

Note that in place of the configuration in which the execution of the torque restriction is prohibited in the low vehicle speed region and the high vehicle speed region described above, a configuration may be adopted in which the execution of the torque restriction itself is allowed, but a restricted value (that is, the correction torque upper limit $T_{lim}$) at the time of executing the torque restriction is appropriately adjusted.

In particular, when the vehicle body speed V is out of the vehicle speed range ($V_{\_lo} \leq V \leq V_{\_hi}$), a control logic for adjusting the acceleration torque $T_{acc}$ to further increase the correction torque upper limit $T_{lim}$ may be adopted. Further, in this case, a configuration may be adopted in which the magnitude of the correction torque upper limit $T_{lim}$ is changed stepwise or continuously according to the magnitude of the vehicle body speed V.

Further, in the present embodiment, when the basic request torque $T_1$ determined according to a request drive force for the electric vehicle is less than a predetermined torque threshold value (the request torque threshold value $T_{1\_th}$), the upper limit of the request torque is set to the maximum torque $T_{max}$ regardless of the magnitude relation between the gradient torque $T_s$ or the winding temperature $T_{emp}$ and the corresponding one of the respective threshold values $T_{s\_th}$ and $T_{emp\_th}$ (No in S140 and S160).

Accordingly, by referring to the basic request torque $T_1$, it is possible to appropriately determine a scene in which there is no benefit of executing the torque restriction at the time of traveling on the uphill road, that is, a scene in which the excessive increase in temperature in the motor control system is less likely to occur, and to appropriately prohibit the execution of the torque restriction in the scene. Therefore, the execution of the torque restriction can be restricted into a torque region in which the excessive increase in temperature in the motor control system is concerned. As a result, it is possible to achieve the better balance between the restraint of the excessive increase in temperature and the securement of the traveling performance of the electric vehicle at the time of traveling on the uphill road.

Note that in place of the configuration in which the execution of the torque restriction is prohibited when the basic request torque $T_1$ described above is less than the request torque threshold value $T_{1\_th}$, a configuration may be adopted in which the execution of the torque restriction itself is allowed, but the magnitude of the correction torque upper limit $T_{lim}$ at the time of executing the torque restriction is appropriately adjusted.

In particular, when the basic request torque $T_1$ determined according to the request drive force for the electric vehicle is less than the request torque threshold value $T_{1\_th}$, the control logic for adjusting the acceleration torque $T_{acc}$ to further increase the correction torque upper limit $T_{lim}$ may be adopted. In this case, a configuration may be adopted in which the magnitude of the correction torque upper limit $T_{lim}$ is changed stepwise or continuously according to the magnitude of the basic request torque $T_1$.

Further, in the present embodiment, the motor controller 3 that functions as the motor control device suitable for performing the motor control method is provided.

The motor controller 3 includes a gradient parameter acquisition unit (the gradient torque estimation unit 33) that acquires a gradient parameter (the disturbance torque $T_d$) indicating a road surface gradient of the electric vehicle, a temperature parameter acquisition unit (the upper limit torque restriction request determination unit 34) that acquires a temperature parameter (the winding temperature $T_{emp}$) indicating a temperature in a motor control system including the electric motor 5, and the torque restriction unit 35 that execute a torque restriction process of setting an upper limit of the request torque to the correction torque upper limit $T_{lim}$ smaller than a predetermined basic torque upper limit (the maximum torque $T_{max}$) when at least one of the gradient parameter and the temperature parameter is equal to or larger than a corresponding one (the gradient torque threshold value $T_{s\_th}$ or the temperature threshold value $T_{emp\_th}$) of predetermined threshold values respectively defined for the gradient parameter and the temperature parameter.

In particular, the torque restriction unit 35 determines a first torque (the gradient torque $T_s$) based on the gradient parameter (the disturbance torque $T_d$), determines a second torque (the acceleration torque $T_{acc}$) for providing a predetermined acceleration to the electric vehicle, and determines the correction torque upper limit $T_{lim}$ by correcting the basic torque upper limit (the maximum torque $T_{max}$) with reference to the first torque (the gradient torque $T_s$) and the second torque (the acceleration torque $T_{acc}$).

[Second Embodiment]

Hereinafter, a second embodiment will be described. Note that the same components as those in the first embodiment are denoted by the same reference numerals, and the description thereof is appropriately omitted.

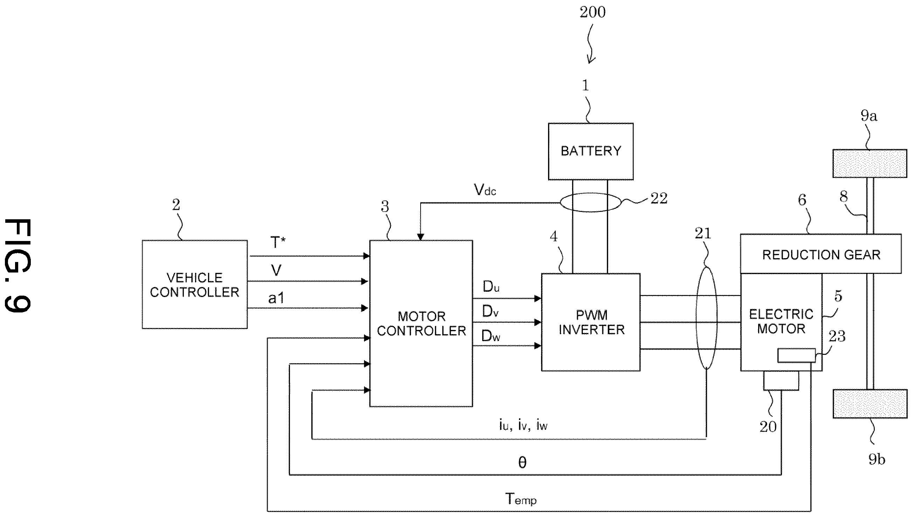

FIG. 9 is a block diagram illustrating main components of a vehicle drive system 200 mounted in the electric vehicle. As illustrated, the vehicle drive system 200 according to the present embodiment is different from that of the first embodiment in that the motor controller 3 receives the vehicle body speed V of the electric vehicle detected by a vehicle speed sensor (not shown) and a front-rear-direction acceleration a1 detected by a front-rear-direction acceleration sensor (not shown) as inputs in addition to the various input values described above, and calculates various calculations.

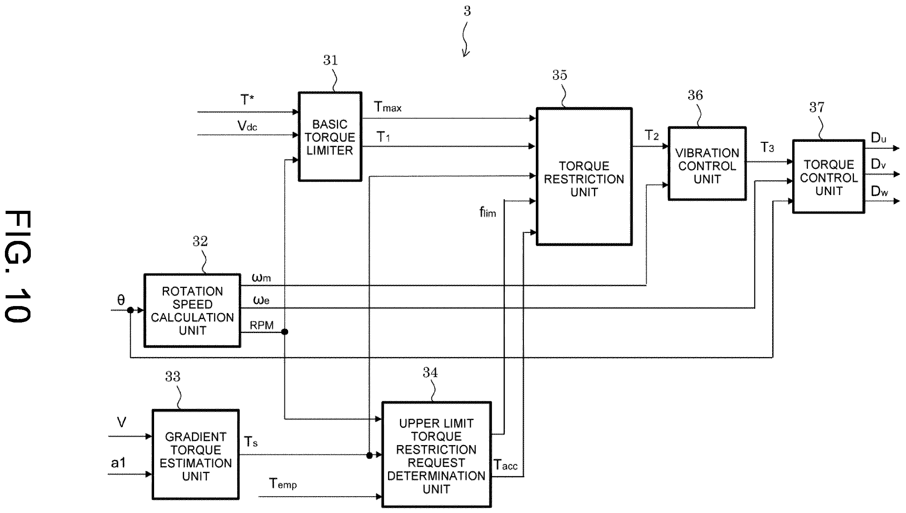

FIG. 10 is a block diagram illustrating a configuration of the motor controller 3 according to the present embodiment. In the motor controller 3 according to the present embodiment, the gradient torque estimation unit 33 receives the vehicle body speed V and the front-rear-direction acceleration a1 as inputs instead of the mechanical angular speed $\omega_m$ and the restricted request torque $T_2$, and calculates the gradient torque $T_s$.

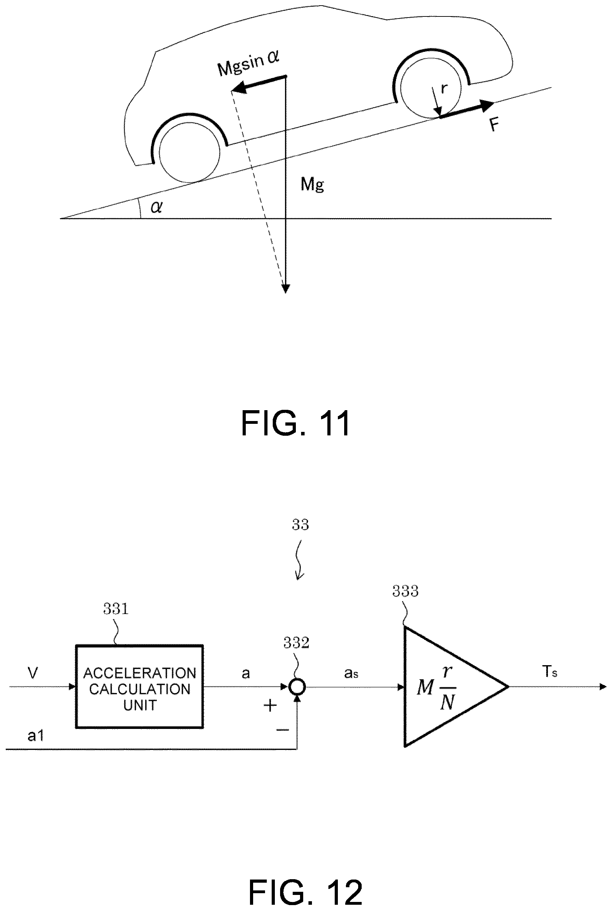

FIG. 11 is a diagram illustrating a method of estimating the gradient torque $T_s$. Generally, a drive force F acting on the tires of the electric vehicle, a vehicle weight M, a gravitational acceleration g, and a gradient angle $\alpha$ of the road surface are in a relation illustrated in FIG. 11. Therefore, the drive force F is the sum of a component in a slope direction of the gravitational acceleration and a net acceleration (hereinafter, also simply referred to as a "vehicle body acceleration a") excluding an influence of the gradient acting on the vehicle body. Therefore, a relation represented by the following Equation 27 is established.

[Math. 11]

$$F = Ma - Mg \cdot \sin \alpha \tag{27}$$

On the other hand, the front-rear-direction acceleration a1 detected by the front-rear-direction acceleration sensor includes an influence of the gravitational acceleration corresponding to the gradient angle $\alpha$ in addition to the vehicle body acceleration a. Therefore, the drive force F can be represented by the product of the vehicle weight M and the front-rear-direction acceleration a1. Therefore, when "M × a1" is substituted into "F" of Equation 27 and both sides are divided by "M", the following Equation 28 is obtained.

[Math. 12]

$$a1 = a - g \cdot \sin \alpha \tag{28}$$

Further, when Equation 28 is rearranged, the following Equation 29 is obtained.

[Math. 13]

$$g \cdot \sin \alpha = a - a1 \tag{29}$$

The vehicle body acceleration a is calculated by differentiating the vehicle body speed V as represented by the following Equation 30.

[Math. 14]

$$a = \frac{dV}{dt} \tag{30}$$

Further, the torque (the gradient torque $T_s$) that counteracts the force in the rollback direction acting on the electric vehicle due to the gradient can be represented by the following Equation 31.
[Math. 15]

$$T_s = Mg \cdot \frac{r}{N} \cdot \sin \alpha \qquad (31)$$

Therefore, the following Equation 32 is obtained by substituting Equation 29 into Equation 31.
[Math. 16]

$$T_s = M \cdot (a - a1) \cdot \frac{r}{N} \qquad (32)$$

FIG. 12 is a block diagram illustrating a configuration of the gradient torque estimation unit 33. As illustrated, the gradient torque estimation unit 33 includes an acceleration calculation unit 331, a subtraction unit 332, and a gain unit 333.

The acceleration calculation unit 331 calculates the vehicle body acceleration a according to Equation 30 based on a change amount of the vehicle body speed V per unit time, and outputs the vehicle body acceleration a to the subtraction unit 332. The subtraction unit 332 subtracts the front-rear-direction acceleration a1 from the vehicle body acceleration a according to Equation 29 to calculate a gradient acceleration $a_s$ (= g sin α) equivalent to the influence of the gravitational acceleration corresponding to the gradient, and outputs the gradient acceleration $a_s$ to the gain unit 333. The gain unit 333 multiplies, according to Equation 31, the gradient acceleration $a_s$ by a gain Mr/N determined based on the vehicle weight M, the overall gear ratio N, and the load radius r of the drive wheels 9a and 9b, converts the gradient acceleration $a_s$ into a torque equivalent value, and outputs the torque equivalent value as the gradient torque $T_s$.

Referring back to FIG. 11, the upper limit torque restriction request determination unit 34 according to the present embodiment receives the gradient torque $T_s$ and the winding temperature $T_{emp}$ as inputs and determines the acceleration torque $T_{acc}$.

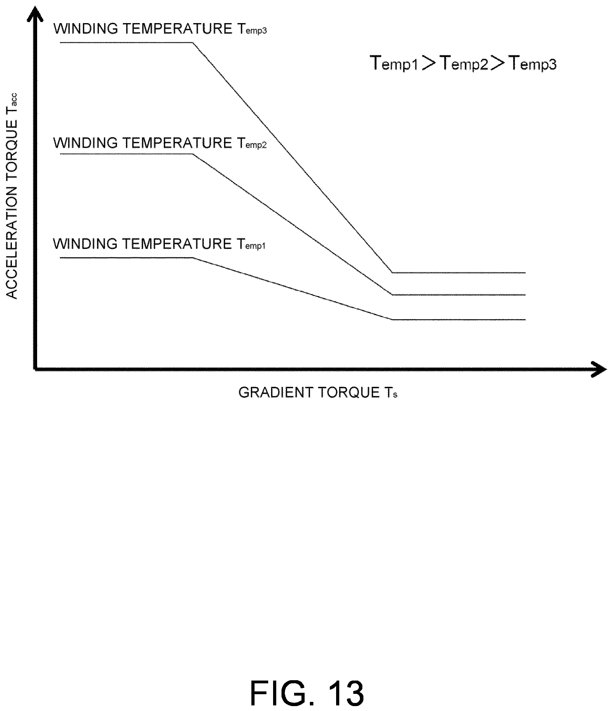

FIG. 13 is a diagram illustrating an example of a map for determining the acceleration torque $T_{acc}$. As illustrated, in the map, the acceleration torque $T_{acc}$ is determined to increase as the winding temperature $T_{emp}$ decreases or as the gradient torque $T_s$ decreases. The map is stored in advance in the predetermined storage area accessible by the motor controller 3. In addition, the map may be appropriately configured in a preferable form from the viewpoint of arithmetic processing, such as a linear interpolation type look-up table or a function with condition determination.

By referring to the map, the upper limit torque restriction request determination unit 34 can determine the appropriate acceleration torque $T_{acc}$ scheduled in advance according to the winding temperature $T_{emp}$ and the gradient torque $T_s$.

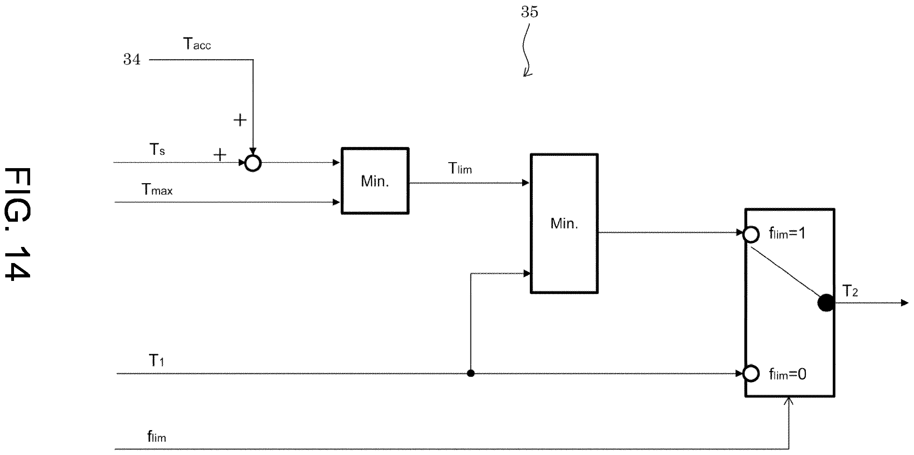

Further, FIG. 14 is a block diagram illustrating a configuration of the torque restriction unit 35 according to the present embodiment. As illustrated, the torque restriction unit 35 receives the variable acceleration torque $T_{acc}$ calculated by the upper limit torque restriction request determination unit 34 as an input instead of the acceleration torque $T_{acc}$ as the fixed value described in the first embodiment, and performs the subsequent calculations in the same manner.

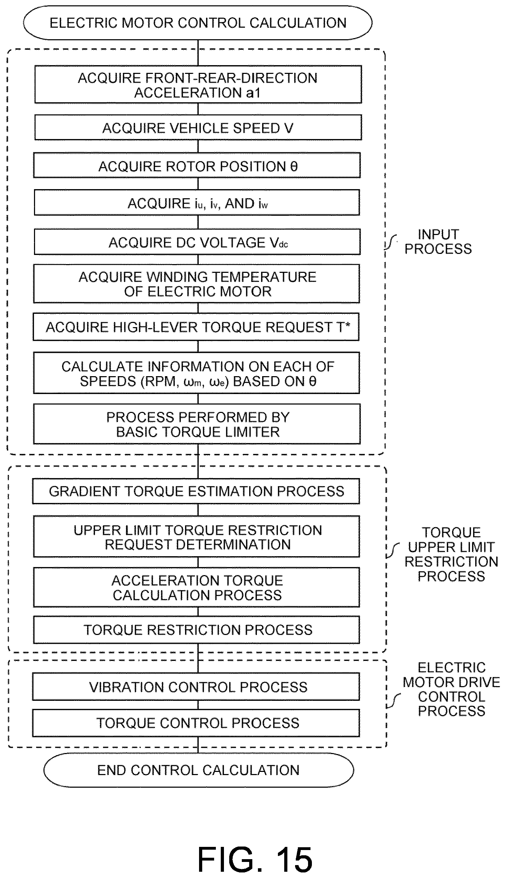

FIG. 15 is a flowchart illustrating an overall process of the motor control method according to the present embodiment described above.

A configuration of the motor control method according to the present embodiment described above and functions and effects thereof will be described.

In the present embodiment, the first torque (the gradient torque $T_s$) is determined based on the front-rear-direction acceleration a1 of the electric vehicle and a rate of change (the vehicle body acceleration a) of a vehicle body speed parameter (the vehicle body speed V) indicating the front-rear-direction speed of the vehicle body of the electric vehicle (Equations 30 to 32).

In this way, by using detection values of a sensor (a G sensor) for detecting an actual front-rear-direction acceleration of the electric vehicle and the vehicle speed sensor, the gradient torque $T_s$ can be determined to an appropriate magnitude according to a change in a traveling resistance at the time of traveling on the uphill road and a change in the drive force F acting on the vehicle body (brake operation or the like).

In the present embodiment, the second torque (the acceleration torque $T_{acc}$) is determined based on at least one of the temperature parameter (the winding temperature $T_{emp}$) and the gradient parameter (the gradient torque $T_s$).

Accordingly, the acceleration torque $T_{acc}$ can be appropriately determined according to the winding temperature $T_{emp}$ and/or the magnitude of the gradient. More specifically, for example, in a scene in which the concern for the excessive increase in temperature in the motor control system is low, such as a case in which the winding temperature $T_{emp}$ is relatively low or a case in which the gradient is relatively small, the acceleration torque $T_{acc}$ is set to be relatively large so that the traveling performance of the electric vehicle can be more reliably maintained.

Note that a configuration may be adopted in which the acceleration torque $T_{acc}$ is determined with reference to the vehicle speed parameter (the vehicle body speed V or the like) indicating the vehicle speed of the electric vehicle instead of or in addition to at least one of the winding temperature $T_{emp}$ and the gradient torque $T_s$.

Accordingly, the second torque (the acceleration torque $T_{acc}$) can be appropriately determined according to the magnitude of the vehicle speed. More specifically, for example, by setting the acceleration torque $T_{acc}$ to be relatively large in the low vehicle speed region in which the vehicle speed is equal to or less than the certain value, the electric vehicle can smoothly enter the traffic flow at the time of starting (a scene in which the vehicle is accelerated from a stopped state to a certain vehicle speed). In addition, by setting the acceleration torque $T_{acc}$ to be relatively small in medium and high speed regions in which the vehicle speed is equal to or higher than a certain value, excessive acceleration after transition from the low vehicle speed region to the medium and high speed regions can be restrained, and the excessive increase in temperature in the motor control system can be restrained.

[Control Results]

Hereinafter, control results of the motor control methods (examples) according to the above embodiments will be described in comparison with control results of a motor control method according to a comparative example. As the comparative example, a control method that is different from the control methods according to the examples in that the basic request torque $T_1$ is output to the vibration control unit 36 as it is without executing the processes by the upper limit torque restriction request determination unit 34 and the torque restriction unit 35 illustrated in FIG. 7 or FIG. 10, and that is common in other components is assumed.

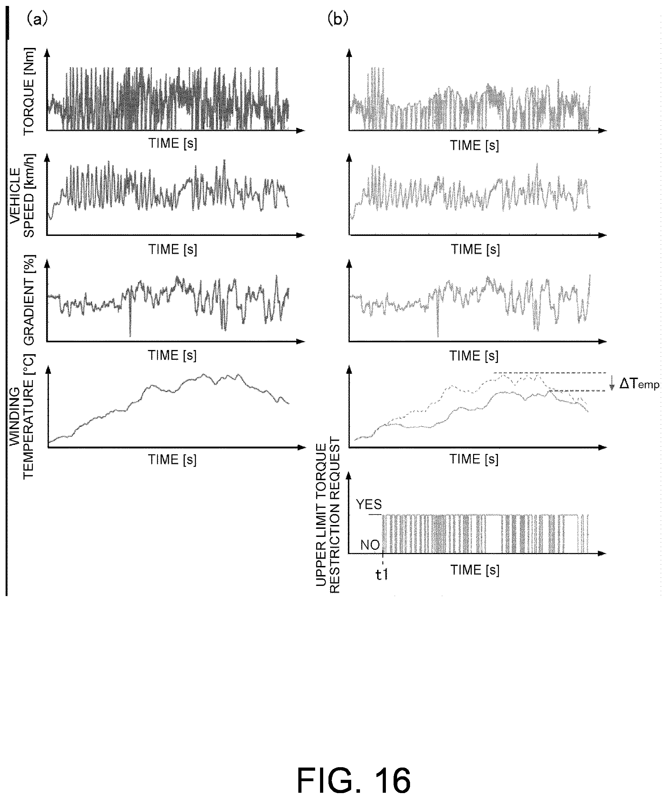

FIG. 16 shows graphs illustrating the respective control results according to the comparative example and the examples. In particular, control results in a case in which the electric vehicle continuously travels on the uphill road for a predetermined period are assumed in FIG. 16. (a) of FIG. 16 shows the control results of the comparative example, and (b) of FIG. 16 shows the control results of the examples.

As illustrated, upward fluctuation of the motor torque $T_m$ after the restriction on the upper limit torque is started (t = t1) is restrained in the control of the examples as compared with that in the control of the comparative example. As a result, the maximum value of the winding temperature $T_{emp}$ in the examples is decreased as compared with that in the comparative example (indicated by the symbol "$\Delta T_{emp}$" in FIG. 16). On the other hand, the vehicle speed after the restriction is started (t = t1) in the examples is slightly decreased as compared with the comparative example, but the vehicle speed is maintained in a range in which the required traveling performance at the time of traveling on the uphill road is not impaired.

Therefore, in the control according to the examples, both the securement of the traveling performance at the time of traveling on the uphill road and the restraint of the excessive increase in temperature are achieved.

Although the embodiments of the present invention have been described above, the configurations described in the above embodiments and modifications are only a part of application examples of the present invention, and are not intended to limit the technical scope of the present invention.

For example, in the embodiments described above, the example in which the winding temperature $T_{emp}$ detected by the thermistor 23 is adopted as the temperature parameter indicating the temperature in the motor control system has been described. However, the temperature parameter is not limited thereto, and any other parameter can be adopted as long as the parameter can indicate a temperature change in the motor control system depending on the magnitude of the gradient of the uphill road. For example, a magnet temperature of the electric motor 5, a temperature of the power semiconductor device in the PWM inverter 4, and/or a temperature of the battery 1 may be used as the temperature parameter.

Further, the configurations of the first embodiment and the second embodiment may be appropriately combined within a range that the configurations are not mutually exclusive. For example, a calculation logic for determining the variable acceleration torque $T_{acc}$ based on at least one of the winding temperature $T_{emp}$, the gradient torque $T_s$, and the vehicle body speed V described in the second embodiment may be applied to the motor control method according to the first embodiment in place of a calculation logic for determining the acceleration torque $T_{acc}$ as the fixed value described in the first embodiment. Further, an estimation logic for the gradient torque $T_s$ described in the second embodiment may be applied to the motor control method according to the first embodiment in place of a calculation logic for determining the gradient torque $T_s$ based on the disturbance torque $T_d$ described in the first embodiment.

**Claims**

1. A motor control method for controlling an operation of an electric motor serving as a drive source based on a predetermined request torque in an electric vehicle including the electric motor, the motor control method comprising:

   acquiring a gradient parameter indicating a road surface gradient of the electric vehicle;

acquiring a temperature parameter indicating a temperature in a motor control system including the electric motor; and

executing a torque restriction process of setting an upper limit of the request torque to a correction torque upper limit smaller than a predetermined basic torque upper limit when at least one of the gradient parameter and the temperature parameter is equal to or larger than a corresponding one of predetermined threshold values respectively defined for the gradient parameter and the temperature parameter, wherein

in the torque restriction process,

a first torque is determined based on the gradient parameter,

a second torque for providing a predetermined acceleration to the electric vehicle is determined, and

the correction torque upper limit is determined by correcting the basic torque upper limit with reference to the first torque and the second torque.

2. The motor control method according to claim 1, wherein
the first torque is calculated based on an estimated value of an output torque of the electric motor and an estimated value of disturbance determined according to a rotation speed of the electric motor.

3. The motor control method according to claim 1, wherein
the first torque is determined based on a front-rear-direction acceleration of the electric vehicle and a rate of change of a vehicle body speed parameter indicating a front-rear-direction speed of a vehicle body of the electric vehicle.

4. The motor control method according to any one of claims 1 to 3, wherein
the second torque is determined based on at least one of the temperature parameter, a vehicle speed parameter indicating a vehicle speed of the electric vehicle, and the gradient parameter.

5. The motor control method according to claim 1, wherein

when a vehicle speed parameter indicating a vehicle speed of the electric vehicle is out of a predetermined vehicle speed range,

the upper limit of the request torque is set to the basic torque upper limit regardless of a magnitude relation between the gradient parameter or the temperature parameter and the corresponding one of the predetermined threshold values, or

the second torque is adjusted to further increase the correction torque upper limit.

6. The motor control method according to claim 1, wherein

when a basic request torque determined according to a request drive force for the electric vehicle is less than a predetermined torque threshold value,

the upper limit of the request torque is set to the basic torque upper limit regardless of a magnitude relation between the gradient parameter or the temperature parameter and the corresponding one of the predetermined threshold values, or

the second torque is adjusted to further increase the correction torque upper limit.

7. A motor control device for controlling an operation of an electric motor serving as a drive source based on a predetermined request torque in an electric vehicle including the electric motor, the motor control device comprising:

a gradient parameter acquisition unit configured to acquire a gradient parameter indicating a road surface gradient of the electric vehicle;

a temperature parameter acquisition unit configured to acquire a temperature parameter indicating a temperature in a motor control system including the electric motor; and

a torque restriction unit configured to execute a torque restriction process of setting an upper limit of the request torque to a correction torque upper limit smaller than a predetermined basic torque upper limit when at least one of the gradient parameter and the temperature parameter is equal to or larger than a corresponding one of predetermined threshold values respectively defined for the gradient parameter and the temperature parameter, wherein

the torque restriction unit

determines a first torque based on the gradient parameter,

determines a second torque for providing a predetermined acceleration to the electric vehicle, and determines the correction torque upper limit by correcting the basic torque upper limit with reference to the first torque and the second torque.

# FIG. 1

FIG. 2

FIG. 3

FIG. 4

FIG. 5

**START**

S110 $Ts \geq Ts\_th?$ — No

Yes

S120 $Temp \geq Temp\_th?$ — No

Yes

S130 $V\_lo \leq V \leq V\_hi?$ — No

Yes

S140 $T_1 \geq T_1\_th?$ — No

Yes

S150 $f_{lim} = 1$

S160 $f_{lim} = 0$

**END**

## FIG. 6

FIG. 7

ELECTRIC MOTOR
CONTROL CALCULATION

ACQUIRE ROTOR POSITION θ

ACQUIRE $i_u$, $i_v$, AND $i_w$

ACQUIRE DC VOLTAGE $V_{dc}$

ACQUIRE WINDING TEMPERATURE
OF ELECTRIC MOTOR

ACQUIRE HIGH-LEVER
TORQUE REQUEST T*

CALCULATE INFORMATION
ON EACH OF SPEEDS (RPM, $\omega_m$, $\omega_e$)
BASED ON θ

PROCESS PERFORMED BY
BASIC TORQUE LIMITER

INPUT
PROCESS

GRADIENT TORQUE ESTIMATION PROCESS

UPPER LIMIT TORQUE
RESTRICTION REQUEST
DETERMINATION

TORQUE RESTRICTION PROCESS

TORQUE
UPPER LIMIT
RESTRICTION
PROCESS

VIBRATION CONTROL PROCESS

TORQUE CONTROL PROCESS

ELECTRIC
MOTOR DRIVE
CONTROL
PROCESS

END CONTROL CALCULATION

FIG. 8

FIG. 9

FIG. 10

FIG. 11

FIG. 12

WINDING TEMPERATURE $T_{emp3}$

WINDING TEMPERATURE $T_{emp2}$

WINDING TEMPERATURE $T_{emp1}$

ACCELERATION TORQUE $T_{acc}$

GRADIENT TORQUE $T_s$

$Temp1 > Temp2 > Temp3$

FIG. 13

FIG. 14

ELECTRIC MOTOR CONTROL CALCULATION

ACQUIRE FRONT-REAR-DIRECTION
ACCELERATION a1

ACQUIRE VEHICLE SPEED V

ACQUIRE ROTOR POSITION θ

ACQUIRE $i_u$, $i_v$, AND $i_w$

ACQUIRE DC VOLTAGE $V_{dc}$

ACQUIRE WINDING TEMPERATURE
OF ELECTRIC MOTOR

ACQUIRE HIGH-LEVER TORQUE REQUEST T*

CALCULATE INFORMATION ON EACH OF
SPEEDS (RPM, $\omega_m$, $\omega_e$) BASED ON θ

PROCESS PERFORMED BY
BASIC TORQUE LIMITER

INPUT
PROCESS

GRADIENT TORQUE ESTIMATION PROCESS

UPPER LIMIT TORQUE RESTRICTION
REQUEST DETERMINATION

ACCELERATION TORQUE
CALCULATION PROCESS

TORQUE RESTRICTION PROCESS

TORQUE
UPPER LIMIT
RESTRICTION
PROCESS

VIBRATION CONTROL PROCESS

TORQUE CONTROL PROCESS

ELECTRIC
MOTOR DRIVE
CONTROL
PROCESS

END CONTROL CALCULATION

# FIG. 15

FIG. 16

## INTERNATIONAL SEARCH REPORT

| International application No. |
| --- |
| **PCT/JP2022/022692** |

**A. CLASSIFICATION OF SUBJECT MATTER**

*B60L 15/10*(2006.01)i; *B60L 15/20*(2006.01)i
FI:    B60L15/10 C; B60L15/20

According to International Patent Classification (IPC) or to both national classification and IPC

**B. FIELDS SEARCHED**

Minimum documentation searched (classification system followed by classification symbols)

B60L15/10; B60L15/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2008-167613 A (TOYOTA JIDOSHA KABUSHIKI KAISHA) 17 July 2008 (2008-07-17) paragraphs [0016]-[0075], fig. 6-9 | 1, 4, 7 |
| Y | | 2-3 |
| A | | 5-6 |
| Y | WO 2018/138780 A1 (NISSAN MOTOR CO., LTD.) 02 August 2018 (2018-08-02) paragraphs [0029], [0038]-[0048], fig. 3, 4 | 2 |
| Y | JP 2012-154471 A (NISSAN MOTOR CO., LTD.) 16 August 2012 (2012-08-16) paragraph [0036] | 3 |
| A | JP 4946100 B2 (TOYOTA JIDOSHA KABUSHIKI KAISHA) 06 June 2012 (2012-06-06) paragraphs [0002]-[0018], fig. 3-6 | 1-7 |
| A | JP 2005-23886 A (HONDA MOTOR CO., LTD.) 27 January 2005 (2005-01-27) entire text, all drawings | 1-7 |

☐ Further documents are listed in the continuation of Box C.   ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 July 2022** | **23 August 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

### INTERNATIONAL SEARCH REPORT
**Information on patent family members**

International application No.

**PCT/JP2022/022692**

| Patent document cited in search report | | | Publication date (day/month/year) | Patent family member(s) | | | Publication date (day/month/year) |
|---|---|---|---|---|---|---|---|
| JP | 2008-167613 | A | 17 July 2008 | US | 2008/0255716 | A1 | |
| | | | | paragraphs [0019]-[0088], fig. 6-9 | | | |
| | | | | DE | 102007055935 | A1 | |
| WO | 2018/138780 | A1 | 02 August 2018 | US | 2020/0164885 | A1 | |
| | | | | paragraphs [0039], [0048]-[0058], fig. 3, 4 | | | |
| | | | | EP | 3575132 | A1 | |
| | | | | KR | 10-2019-0092596 | A | |
| | | | | CN | 110234533 | A | |
| | | | | CA | 3059420 | A1 | |
| JP | 2012-154471 | A | 16 August 2012 | (Family: none) | | | |
| JP | 4946100 | B2 | 06 June 2012 | (Family: none) | | | |
| JP | 2005-23886 | A | 27 January 2005 | US | 2005/0003926 | A1 | |
| | | | | entire text, all drawings | | | |
| | | | | EP | 1493604 | A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4946100 B

- JP 3508742 B